# EUROPÄISCHE PATENTANMELDUNG

(11) **EP 0 894 654 A2**
(43) Veröffentlichungstag der Anmeldung: **03.02.1999**
(21) Anmeldenummer: 98110671.9
(22) Anmeldetag: 10.06.1998
(51) Int. Cl.: B60J 3/02

(54) **Sonnenblende für Fahrzeuge**

(30) Priorität: 22.07.1997 DE 19731394
(71) Anmelder: Johnson Controls Interiors GmbH, 42285 Wuppertal (DE)
(72) Erfinder: Viertel, Lothar, 66802 Altforweiler (DE); Welter, Patrick, 57730 La Chambre (FR)

(57) **Zusammenfassung**

Beschrieben wird eine Sonnenblende für Fahrzeuge, deren Sonnenblendenkörper (1) eine randoffene von einem Lagerstift (3) durchquerte Ausnehmung (4) aufweist, die durch eine sich etwa parallel zum Lagerstift (3) erstreckende Bodenwandung (8) und zwei, sich links und rechts daran anschließende Seitenwandung (9) begrenzt ist. Um zu verhindern, daß durch die Ausnehmung (4) eine Blendgefahr ausgeht, ist die Erfindung gekennzeichnet durch eine den Ausnehmungsbereich zwischen den Seitenwandungen (9) sowie zwischen der Bodenwandung (8) und dem Lagerstift (3) abschirmende, scharnierend an der Bodenwandung (8) angeordnete Verschlußklappe (10).

## Beschreibung

Die Erfindung bezieht sich auf eine Sonnenblende für Fahrzeuge, deren Sonnenblendenkörper eine randoffene von einem Lagerstift durchquerte Ausnehmung aufweist, die durch eine sich etwa parallel zum Lagerstift erstreckende Bodenwandung und zwei, sich links und rechts daran anschließende Seitenwandungen begrenzt ist.

Übliche Fahrzeugsonnenblenden weisen einen Sonnenblendenkörper auf, der über eine Hauptlagerachse und einen Lagerstift an der Fahrzeugkarosserie befestigbar ist. Die Hauptlagerachse ist einendig im Sonnenblendenkörper und anderendig in einem Drehlagergehäuse gelagert, während der Lagerstift in das Klammermaul eines Gegenlagergehäuses eingreift. An der Fahrzeugkarosserie sind das Drehlagergehäuse und das Gegenlagergehäuse befestigt. Die Verbindung zwischen dem Gegenlagergehäuse und dem Lagertstift ist lösbar, damit der Sonnenblendenkörper im Bedarfsfall vom Gegenlagerböckchen gelöst und zu einer Seitenscheibe eines Fahrzeugs geschwenkt werden kann. Eine übliche Sonnenblende der eingangs genannten Art zeigt z. B. die DE 33 42 897 A1. Auch bei dieser bekannten Sonnenblende weist der Sonnenblendenkörper eine randoffene, von einem Lagerstift durchquerte Ausnehmung auf, die erforderlich ist, um ein Ein- und Ausrasten des Lagerstifts in bzw. aus dem Gegenlagerböckchen zu ermöglichen. Die randoffene Ausnehmung ist aus funktionalen Gründen relativ groß ausgelegt, was häufig zu Beanstandungen führt, weil in verschiedenen Klappstellung des Sonnenblendenkörpers sich ein äußerst unerwünschter Lichteinfall, der zur Blendung führt, ergibt.

Der vorliegenden Erfindung liegt daher die Aufgabe zugrunde, hier Abhilfe zu schaffen und eine Sonnenblende der eingangs genannten Art zur Verfügung zu stellen, von deren im Sonnenblendenkörper vorgesehenen randoffenen Ausnehmung keine Blendgefahr mehr auszugehen vermag.

Zur Lösung dieser Aufgabe ist erfindungsgemäß die im Anspruch 1 angegebene Maßnahme vorgesehen.

Die Maßnahme nach Anspruch 2 stellt sicher, daß keine nachträglichen Montagemanipulationen erforderlich sind.

Der besondere Vorteil der Maßnahme nach Anspruch 3 ist darin zu sehen, daß sich die Anwendung und Ausbildung der Verschlußklappe bei der Fertigung des Sonnenblendenkörpers praktisch von selber ergibt, so daß keine Zusatzkosten mit Ausnahme der einmaligen Anpassungsmaßnahmen am Blasformwerkzeug entstehen. Die Verschlußklappe wird durch einen ohnehin vorhandenen Materiallappen gebildet, der bisher als Abfallstück behandelt und verschrottet wurde.

Die Weiterbildung der Erfindung nach Anspruch 4 trägt zum guten Aussehen der Sonnenblende bei.

Wie sich aus der Maßnahme nach Anspruch 5 ergibt, läßt sich die Erfindung auch bei Sonnenblenden mit Umhüllung problemlos realisieren, wobei auch hier aus einem früheren Abfallstück ein sinnvolles Funktionsteil in Form einer Licht abschottenden Verschlußklappe wird.

Ein Ausführungsbeispiel der Erfindung wird im folgenden anhand der Zeichnungen näher erläutert, und es zeigen:

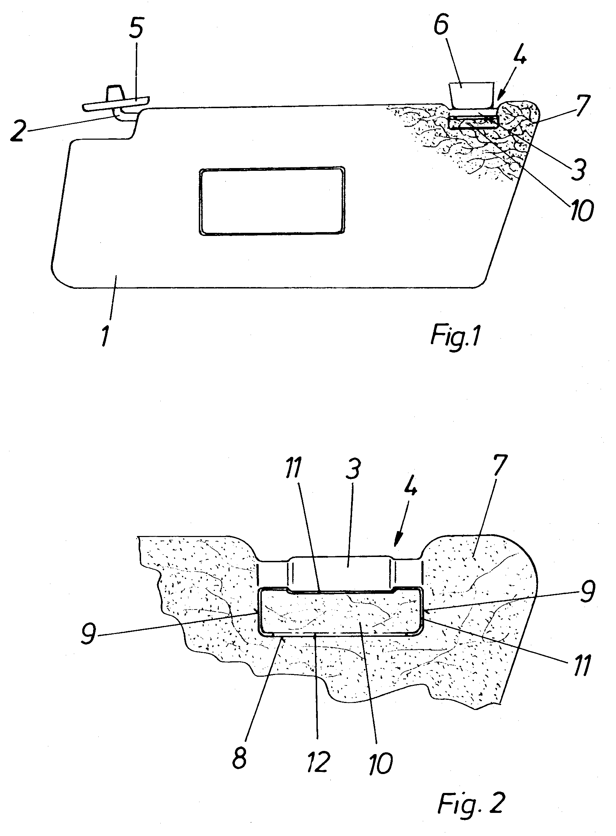

- Fig. 1: eine komplette Sonnenblende in Ansicht,
- Fig. 2: eine Einzelheit nach Fig. 1,
- Fig. 3: einen vertikalen Schnitt durch den Gegenlagerbereich,
- Fig. 4: einen Fig. 3 entsprechenden Schnitt mit einer ein Freilegen der Verschlußklappe verdeutlichenden Darstellung,
- Fig. 5: einen vertikalen Schnitt durch den Gegenlagerbereich mit in Funktionsstellung befindlichem Sonnenblendenkörper und
- Fig. 6: den Schnitt nach Fig. 5 mit einem Sonnenblendenkörper in Ruhestellung.

Die neue Sonnenblende besteht aus einem Sonnenblendenkörper 1 mit darin eingelagerter Hauptachse 2 und eingelagertem Lagerstift 3, der eine randoffene Ausnehmung 4 überquert, einem mit der Hauptachse 2 verbundenen, an der Fahrzeugkarosserie festlegbaren Drehlagergehäuse 5 und einem ebenfalls an der Fahrzeugkarosserie festlegbaren Gegenlagergehäuse 6 zur lösbaren Lagerung des Lagerstifts 3.

Der Sonnenblendenkörper 1 ist vorzugsweise ein Blasformkörper, der aus einer Schlauchfolie aus PP-Material in herkömmlicherweise gefertigt werden und eine Oberflächennarbung 7 aufweisen kann.

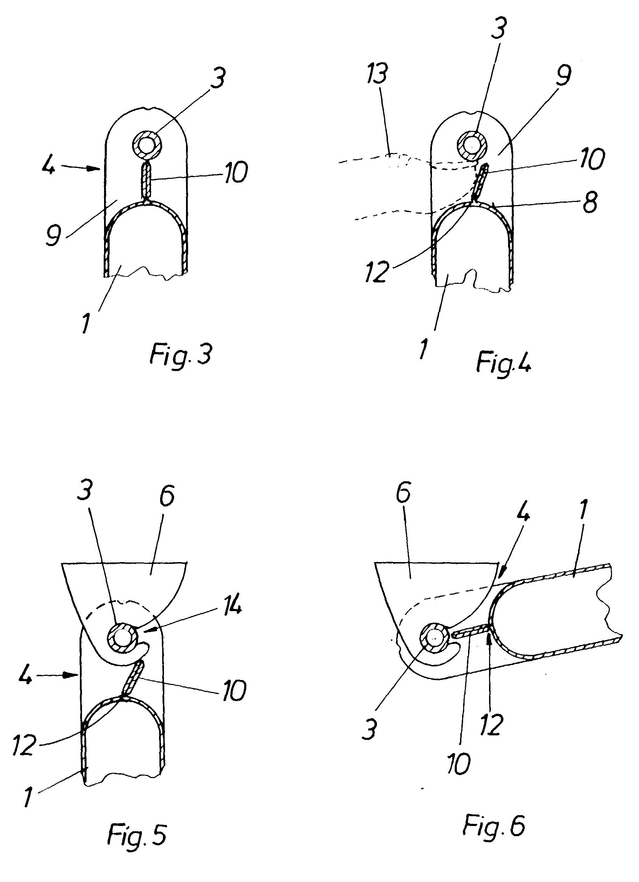

Die randoffene Ausnehmung 4 ist durch eine sich etwa parallel zum Lagerstift 3 erstreckende Bodenwandung 8 und zwei, sich links und rechts daran anschließende Seitenwandung 9 begrenzt. Eine Besonderheit der neuen Sonnenblende besteht darin, daß der Ausnehmungsbereich zwischen den Seitenwandungen 9 einerseits und zwischen der Bodenwandung 8 und dem Lagerstift 3 andererseits durch eine Verschlußklappe 10 ausgefüllt und abgeschirmt ist. Diese Verschlußklappe 10 ist über eine Schwimmhaut 11, die leicht zerstört werden kann, mit den Seitenwandungen 9 und dem Lagerstift 3 verbunden und weiterhin über ein stabiles Filmscharnier 12 mit der Bodenwandung 8 der Ausnehmung 4. Fig. 4 macht augenscheinlich wie die Schwimmhaut 11 mittels des Daumens 13 einer menschlichen Hand leicht zerrissen werden kann. Die Verschlußklappe 10 läßt sich hiernach um das Filmscharnier 12 schwenken, was selbsttätig beim Einführen des Lagerstifts 3 in das Klammermaul 14 des Gegenlagergehäuses 6 wie auch beim Klappen des Sonnenblendenkörpers 1 aus der Ruhelage nach Fig. 4 in die Gebrauchslage nach Fig. 3 erfolgt, wozu auf diese Darstellungen verwiesen wird.

Fig. 5 und 6 stellen eine Sonnenblendeneinbausituation mit seriengemäßem Gegenlagergehäuse 6 dar. In Fig. 5 ist die Stellung des Sonnenblendenkörpers 1 in senkrechter Gebrauchsstellung gezeigt, wobei gut zu erkennen ist, wie die Verschlußklappe 10 die sonst übliche Öffnung gegen Lichteinfall abschottet. In Fig. 6 ist die Ruhelage des Sonnenblendenkörpers 1 am Fahrzeughimmel dargestellt, wobei sich für den Betrachter durch das Vorhandensein der Verschlußklappe 10 ein für diesen Bereich geschlossenes und harmonisches Bild ergibt.

## Patentansprüche

1. Sonnenblende für Fahrzeuge, deren Sonnenblendenkörper (1) eine randoffene von einem Lagerstift (3) durchquerte Ausnehmung (4) aufweist, die durch eine sich etwa parallel zum Lagerstift (3) erstreckende Bodenwandung (8) und zwei, sich links und rechts daran anschließende Seitenwandung (9) begrenzt ist, gekennzeichnet durch eine den Ausnehmungsbereich zwischen den Seitenwandungen (9) sowie zwischen der Bodenwandung (8) und dem Lagerstift (3) abschirmende, scharnierend an der Bodenwandung (8) angeordnete Verschlußklappe (10).

2. Sonnenblende nach Anspruch 1, dadurch gekennzeichnet, daß die Verschlußklappe (10) aus dem Material des Sonnenblendenkörpers (1) besteht und einstückig mit dem Sonnenblendenkörper (1) ausgebildet ist.

3. Sonnenblende nach Anspruch 1 oder 2, dadurch gekennzeichnet, daß der Sonnenblendenkörper (1) ein hohler Blasformkörper mit daran angeformter Verschlußklappe (10) ist, die aus zwei aneinanderliegenden Wandungsbereichen des Sonnenblendenkörpers (1) gebildet ist und mit dem Sonnenblendenkörper (1) im Bereich des Lagerstifts (3) und der Seitenwandungen (9) der Ausnehmung (4) über eine Schwimmhaut (11) leicht trennbar verbunden ist und die im Bereich der Bodenwandung (8) der Ausnehmung (4) über ein Filmscharnier (12) bleibend mit dem Sonnenblendenkörper (1) verbunden ist.

4. Sonnenblende nach wenigstens einem der Ansprüche 1 bis 3, dadurch gekennzeichnet, daß die Oberflächen der Verschlußklappe (10) eine mit der Oberfläche des Sonnenblendenkörpers (1) übereinstimmende Narbung (7) oder dgl. Oberflächenstruktur aufweisen.

5. Sonnenblende nach Anspruch 1, dadurch gekennzeichnet, daß der Sonnenblendenkörper (1) eine aus Dekormaterial bestehende Umhüllung aufweist und daß die Verschlußklappe (10) aus dem Dekormaterial gebildet ist.
